# EUROPEAN PATENT SPECIFICATION

(11) **EP 1 271 936 B1**
(45) Date of publication and mention of the grant of the patent: **22.02.2012**
(21) Application number: 02251359.2
(22) Date of filing: 27.02.2002
(51) Int. Cl.: H04N 5/238

(54) **Imaging apparatus**
Bildaufnahmevorrichtung
Dispositif de prise de vues

(30) Priority: 22.06.2001 KR 2001035923
(43) Date of publication of application: 02.01.2003
(73) Proprietor: SAMSUNG ELECTRONICS CO., LTD., Suwon-si, Gyeonggi-do 442-742 (KR)
(72) Inventor: Yoo, Kyung-soo, Kweonsun-gu, Suwon-city, Kyungki-do (KR)
(74) Representative: Walaski, Jan Filip

(56) References cited:
- US-A- 4 470 687
- US-A- 5 245 380
- US-A- 5 517 243
- PATENT ABSTRACTS OF JAPAN vol. 1999, no. 04, 30 April 1999 (1999-04-30) -& JP 11 015040 A (COPAL CO LTD), 22 January 1999 (1999-01-22)
- PATENT ABSTRACTS OF JAPAN vol. 2000, no. 21, 3 August 2001 (2001-08-03) -& JP 2001 117137 A (NIDEC COPAL CORP), 27 April 2001 (2001-04-27)
- PATENT ABSTRACTS OF JAPAN vol. 1997, no. 03, 31 March 1997 (1997-03-31) & JP 08 308275 A (SONY CORP), 22 November 1996 (1996-11-22)

## Description

The present invention relates to an imaging apparatus including an iris and aniris-driving motor, functioning together to set both the aperture and the exposure time for capture of an image, and an elastic member for closing the iris.

A digital imaging apparatus, such as a digital camera or camcorder, captures an image by sensing light reflected from a subject by using a photoelectric transducer. The digital imaging apparatus stores the image in a memory device as digital information so that a user can edit the image by means of a computer.

When capturing a still image, the digital imaging apparatus uses a mechanical shutter to reduce bluring of the captured image due to movement of the subject or shaking of the user's hands.

A digital camcorder typically consists of an imaging unit, stepping motors and motor driving units for driving respective elements of the imaging unit, an analogue-to-digital (A/D) converter, a signal processing unit, a memory, an imaging chip, a pulse generation unit and a control unit.

The imaging unit includes a zoom lens unit for adjusting the magnification of the scene, a mechanical shutter unit for preventing bluring of the captured image arising from shaking of the user's hands or movement of the subject, a diaphragm unit for controlling the amount of light incident on the photoelectric transducer, a focus lens unit for forming a sharp image on the photoelectric transducer and the photoelectric transducer for converting the incident light into an electrical signal.

The zoom lens unit, the mechanical shutter unit, the diaphragm unit and the focus lens unit are driven by respective stepping motors. The respective stepping motors are controlled by the motor driving units operating according to control signals from a control unit.

A pulse generation unit outputs a charge extract pulse for extracting charges accumulated in the photoelectric transducer, and an erase pulse for erasing the accumulated charges. The A/D converter converts the analogue signal from the photoelectric transducer into a digital signal using a correlation dual sampling process and an auto gain control process. The signal processing unit encodes and compresses the digital signal. The image chip generates an image suitable for imaging apparatus, such as digital video compressors (DVC) and digital signal compressors (DSC). The resultant image data is stored in memory.

The control unit controls the entire operation of the above elements. In particular, the control unit outputs a control signal to the motor control unit for controlling the operation of the stepping motor connected to the mechanical shutter unit, thereby preventing blur of the captured image arising from shaking of the user's hands or movement of the subject.

However, the size of the lens unit must be sufficient to accommodate the mechanical shutter, and special stepping motors and motor driving units are required for high shutter speeds, which results in high production costs.

In order to overcome the foregoing problems, it has been suggested that the mechanical shutter unit be removed and that the close time of a diaphragm be decreased by adjusting the elasticity of a spring connected to a rotor of a diaphragm motor.

In US 5,517,243, a prior art image sensing apparatus is disclosed, in which a diaphragm-shutter assembly, comprising a half-open shutter, is provided. A spring is provided, to urge the half-open shutter into its closed position, while a motor is arranged to drive the shutter between its open and closed positions.

According to the present invention, an imaging apparatus includes a diaphragm unit comprising a diaphragm, a diaphragm driving unit and an elastic member for closing the diaphragm, the diaphragm unit and the diaphragm driving unit (300) being arranged to function together to set both the aperture and the exposure time for capture of an image the and the diaphragm driving unit being operable to drive the diaphragm during opening and closing thereof, wherein the diaphragm driving unit comprises a driving coil and a damping coil, and a switch is connected to said damping coil and a resistance, the switch being operated by the control unit such that the damping coil is effective during opening of the diaphragm and ineffective during closing of the diaphragm.

Preferably, an apparatus according to the present invention includes a photoelectric transduction unit, such as a CCD image sensor, arranged to be exposed by the opening of said iris. More preferably, the control unit is configured, for each exposure, to send a close signal to the diaphragm driving unit until the extraction of image charges from the photoelectric transduction unit is complete.

Embodiments of the present invention will now be described, by way of example, with reference to the accompanying drawings, in which:-
Figure 1 is a block diagram illustrating the internal structure of a digital camcorder;
Figure 2 is a block diagram illustrating the internal structure of an imaging apparatus having a first blur prevention function in accordance with the present invention;
Figure 3 is a block diagram illustrating one example of a diaphragm driving unit suitable for an imaging apparatus in accordance with the present invention;
Figure 4A is a circuit diagram illustrating one example of the diaphragm driving unit suitable for an imaging apparatus in accordance with the present invention;
Figures 4B through 4D show variations with time of a diaphragm control signal and a reference potential signal input to an input terminal unit, a driving voltage supplied to a driving coil, and a driving current flowing through the driving coil, respectively;
Figure 5A is a circuit diagram illustrating another example of a diaphragm driving unit suitable for the photographing apparatus in accordance with the present invention;
Figures 5B and 5C show variations of the diaphragm control signal and the reference potential signal input to an input terminal unit of the diaphragm driving unit of Figure 5A, and the voltage supplied to the driving coil with time respectively;
Figure 6 is a block diagram illustrating the internal structure of an imaging apparatus having the function of preventing blur of a still image in accordance with a second embodiment of the present invention; and
Figure 7 shows variations of an electronic shutter speed and a close time of a diaphragm unit of the imaging apparatus of Figure 6.

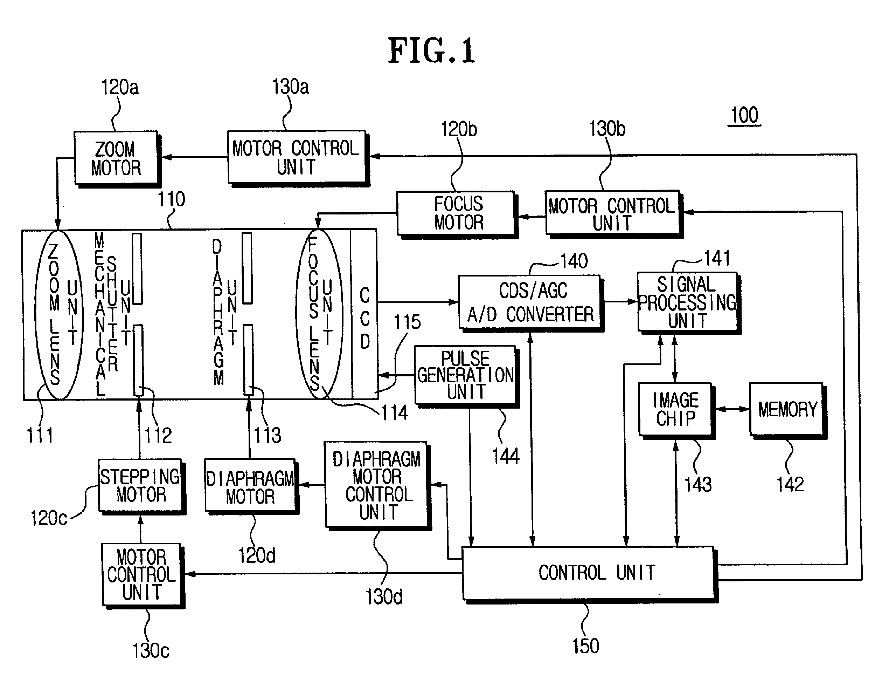

Referring to Figure 1, a digital camcorder 100 includes: an imaging unit 110 (not in accordance with the present invention), stepping motors 120a∼20d, motor driving units 130a∼30d for driving respective elements of the imaging unit 110, an A/D converter 140, a signal processing unit 141, a memory 142, an image chip 143, a pulse generation unit 144 and a control unit 150.

The imaging unit 110 includes a zoom lens unit 111 for adjusting the magnification of a subject incident on a photoelectric transducer (change-coupled device or CCD) 115, a mechanical shutter unit 112 for preventing blurring of the image arising from shaking of the user's hands or movement of the subject, a diaphragm unit 113 for controlling the amount of light incident on the photoelectric transducer 115, a focus lens unit 114 for focus the image on the photoelectric transducer 115, and the photoelectric transducer (CCD) 115 for converting the incident light into an electrical signal.

The zoom lens unit 111, the mechanical shutter unit 112, the diaphragm unit 113 and the focus lens unit 114 are driven by respective stepping motors 120a^{~}120d. The respective stepping motors 120a^{~}120d are controlled by the motor driving units 130a^{~}130d operated according to control signals from the control unit 150.

The pulse generation unit 144 outputs a charge extract pulse for extracting charge accumulated in the photoelectric transducer 115, and an erase pulse for erasing the accumulated charge. The A/D converter 140 converts the analogue signal from the photoelectric transducer 115 into a digital signal according to a correlation dual sampling process and an auto gain control process. The signal processing unit 141 encodes and compresses the digital signal. The image chip 143 generates an image suitable for an imaging apparatus, such as a DVC or a DSC. The final image is stored in the memory 142.

The control unit 150 controls the entire operation of the above elements. In particular, the control unit 150 outputs a control signal to the motor driving unit 130c for controlling the operation of the stepping motor 120c connected to the mechanical shutter unit 112, thereby preventing blurring of the image arising from shaking of the user's hands or movement of the subject.

However, the size of the lens is increased by the inclusion of the mechanical shutter, and special stepping motors and motor driving units are required to increase shutter speed, which results in high production cost.

On the other hand, in order to overcome the foregoing problems, it has been suggested that the mechanical shutter unit be removed and that the close time of the diaphragm be decreased by adjusting the elasticity of a spring connected to a rotor of the diaphragm motor 120d.

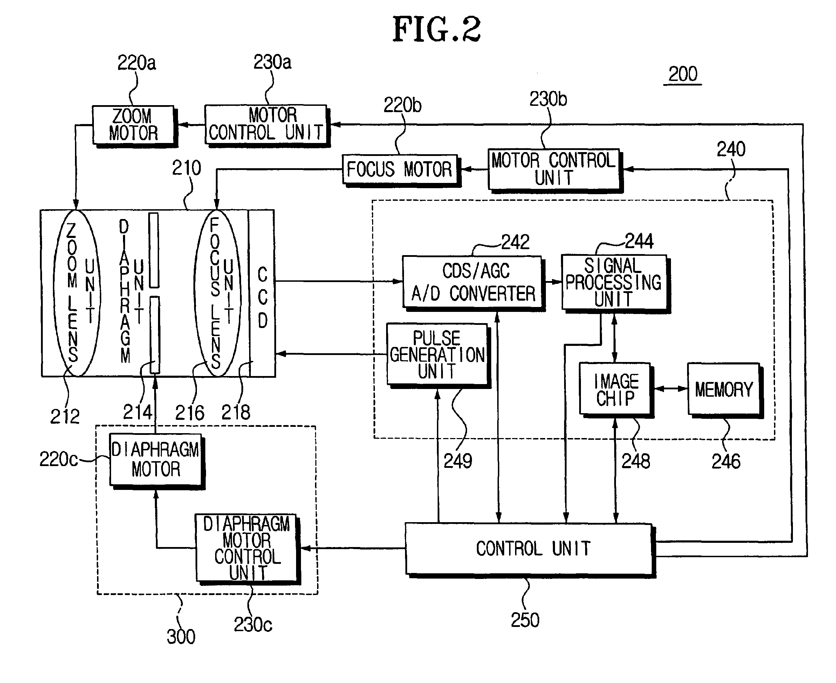

Referring to Figure 2, the imaging apparatus 200, according to the present invention, includes an imaging unit 210, stepping motors 220a^{~}220c, motor driving units 230a^{~}230c for driving the elements of the imaging unit 210, an image signal generating unit 240 and a control unit 250.

The imaging unit 210 includes a zoom lens unit 212 for adjusting magnification, a diaphragm unit 214 for controlling the amount of incident light, a focus lens unit 216 for controlling focusing of the image and a photoelectric transduction unit (CCD) 218 for converting incident light into an electrical signal.

The zoom lens unit 212, the diaphragm unit 214 and the focus lens unit 113 are driven by respective stepping motors 220a^{~}220c. In addition, the respective stepping motors 220a^{~}220c are controlled by respective motor driving units 230a^{~}230c operated according to control signals from the control unit 250.

The image signal generating unit 240 includes a pulse generation unit 249 for outputting a charge extract pulse for extracting charge accumulated in the photoelectric transduction unit 218 and an erase pulse for erasing the accumulated charge, an A/D converter 242 for converting the analogue signal from the photoelectric transduction unit 218 into a digital signal according to a correlation dual sampling process and an auto gain control process, a signal processing unit 244 for encoding and compressing the digital signal, an image chip 248 for generating an image signal suitable for an imaging apparatus, such as a DVC or a DSC; and a storing unit 246 for storing the final image data.

The control unit 250 controls the entire operation of the above elements. In particular, when a still image is captured, the control unit 250 outputs a control signal for supplying a forward driving voltage to the motor driving unit 230c connected to the diaphragm unit 214 so as to open the diaphragm unit 214, and also outputs a control signal for supplying a backward driving voltage to the motor driving unit 230c connected to the diaphragm unit 214 so as to close the diaphragm unit 214.

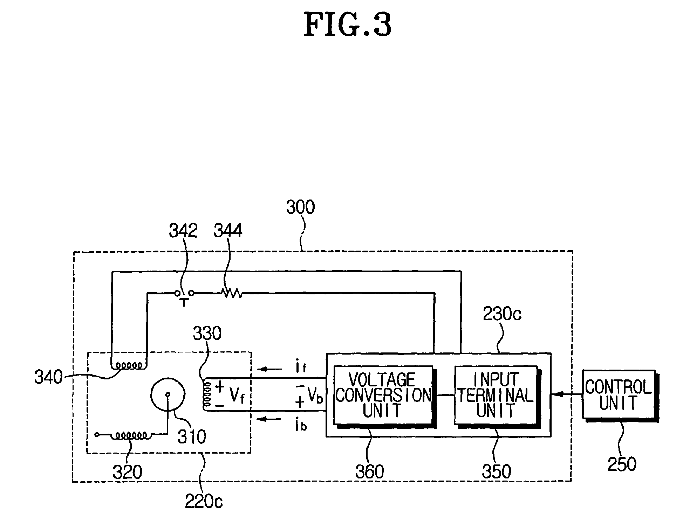

Referring to Figure 3, the diaphragm driving unit 300 includes a diaphragm motor 220c for opening and closing the diaphragm unit 214 by imparting a rotational movement generated by a magnetic field to the diaphragm unit 214, and a diaphragm motor control unit 230c for controlling a direction of rotation and speed of the diaphragm motor 220c.

The diaphragm motor 220c includes a rotor 310 connected to the diaphragm unit 214 and rotated in opposite directions for opening and closing the diaphragm unit 214 under the control of the diaphragm motor control unit 230c, an elastic member 320 having one end connected to a fixed point and another end connected to the rotor 310 for rotating the rotor 310 in the closing direction for closing the diaphragm unit 214, a driving coil 330 for generating a magnetic field to cause rotational movement to the rotor 310 in opposite directions for opening and closing of the diaphragm unit 214, and a damping coil 340 having a switch 342 and a damping resistance 344, and preventing damping of the rotor 310.

The diaphragm motor control unit 230c includes an input voltage terminal unit 350 having one end for receiving a reference potential signal and another end for receiving a diaphragm control signal, and a voltage conversion unit 360 for converting the input voltage from the input voltage terminal unit 350 into a driving voltage of the diaphragm driving unit 220c.

The control unit 250 outputs a control signal for varying the diaphragm control signal so as to form, in the driving coil 330, a driving voltage in the closing direction of the diaphragm unit 214, and a control signal for opening the switch 342 connected to the damping coil 340 in the diaphragm motor control unit 230c when closing the diaphragm unit 214.

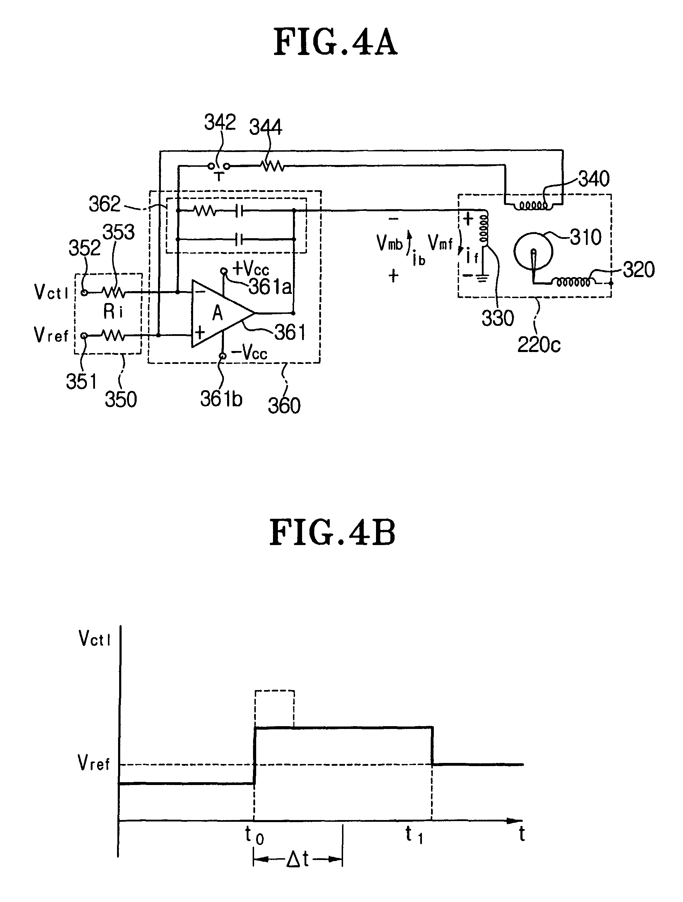

Referring to Figure 4A, the reference potential signal Vref is input into one end 351 of the input terminal unit 350, and the diaphragm control signal Vct1 is input into the other end 352 thereof. The end 352 receiving the diaphragm control signal Vct1 is connected to an input resistance 353.

The voltage conversion unit 360 includes an OP-amp 361 and an integrating circuit 362. The inverting terminal of the OP-amp 361 receives the diaphragm control signal Vct1 via resistor 353 and the non-inverting terminal thereof receives the reference potential signal Vref via resistor 350. A first power terminal 361a of the OP-amp 361 receives a positive supply voltage + Vcc (for example, 15V), and a second power terminal 361b thereof receives a negative supply voltage -Vcc (for example, -15V).

The integrating circuit 362 is a negative feedback circuit of the OP-amp 361. In the integrating circuit 362, a resistance 362a and a capacitor 362b connected in series are connected in parallel with a capacitor 362c. The output voltage is fed back to the inverting input terminal 361 by the integral circuit 362.

The output of the voltage conversion unit 360 is supplied to one end of the driving coil 330 and the other end of the driving coil 330 is grounded. The output from the voltage conversion unit 360 is controlled to supply current to the driving coil 330, in the appropriate directions for opening and closing the diaphragm, to the driving coil according to variations of the input diaphragm control signal.

One end of the damping coil 340 is connected via the switch 342 and the damping resistance 344 to the inverting input of the OP-amp 361. The other end of the damping coil 340 is connected to the non-inverting input of the OP-amp 361. The damping coil 340 prevents damping of the diaphragm motor 220c.

The operation of the diaphragm driving unit 300 shown in Figure 4A will now be described in detail with reference to Figures 4B through 4D.

Figures 4B through 4D show how the diaphragm control signal and the reference voltage signal, input into the input terminal unit 350, the driving voltage supplied to the driving coil 330 and the driving current flowing through the driving coil 330 vary with time respectively.

When a diaphragm control signal, having a potential level lower than the reference potential signal, is input into the end 352 of the input terminal unit 350, a current *if* flows through the driving coil 330 in the direction for opening the diaphragm unit 214. When the diaphragm control signal is varied to close the diaphragm unit 214 for a predetermined time t₀, a current *ib* flows through the driving coil 330 in the opposite direction relative to the current *if*. The rotor 310 is rotated in the direction for closing the diaphragm unit 214 by the current *ib.* The close time of the diaphragm unit 214 is shortened according to a contractive force of the spring 320.

Preferably, the switch 342 connected to the damping coil 340 via resistor 344 is opened at a time t₀ when the diaphragm control signal is varied to close the diaphragm unit 214. Accordingly, the diaphragm unit 214 can be more rapidly closed.

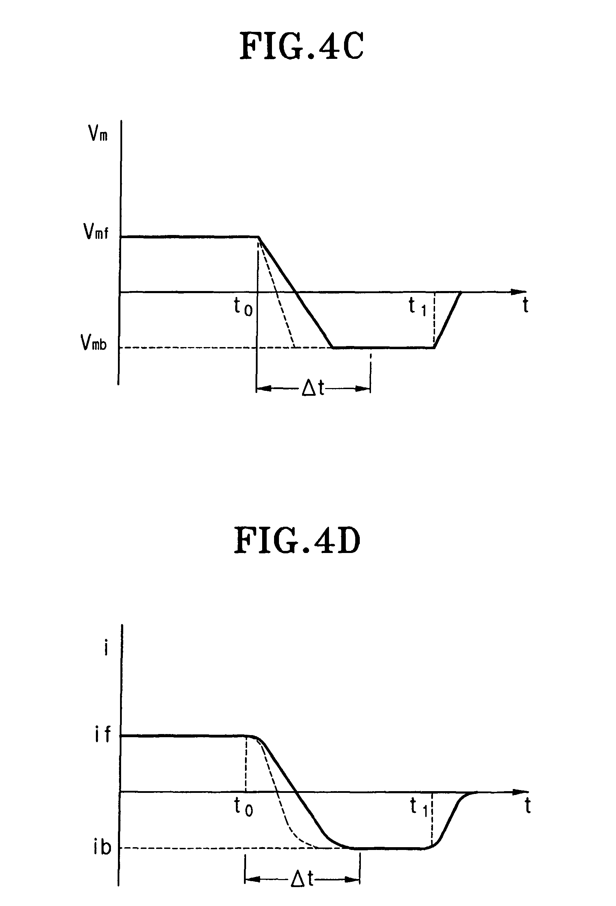

The voltage applied to the driving coil 330 is completely inverted at a predetermined time after the time t₀. At this time, presuming that a time for completely closing the diaphragm is Δt, Δt ranges from 5.97ms to 6.03ms. Preferably, the inverted voltage is supplied to the driving coil 330 until the charges accumulated in the photoelectric transduction unit 218 are completely extracted. This time is represented by t₁ in Figure 4C.

Figure 4D shows variations of the current *if* flowing through the driving coil in the direction for opening the diaphragm unit. The magnitude of the current *if* starts to be reduced at time t₀, and a direction of the current *if* is changed after a predetermined time thereafter. In Figure 4D, *ib* denotes the current flowing in the opposite direction relative to the current *if.*

Preferably, the diaphragm control signal varied at time t₀ is supplied until the operation of extracting the charge accumulated in the photoelectric transduction unit 218 is finished according to the charge extract pulse from the pulse generation unit 249. Advantageously, the diaphragm control signal is varied so that an initial value of the voltage applied to the driving coil 330 is higher than a final value thereof for a predetermined time after a start time t₀ of the close operation of the diaphragm unit 214. In Figures 4B through 4D, the waveform of the diaphragm control signal, the voltage applied to the driving coil 330, and the current flowing through the driving coil 330, respectively, are indicated by dotted lines. As a result, the time for closing the diaphragm unit 214 can be reduced.

In the above-described embodiment, variations in the diaphragm control signal and the opening and closing operations of the switch 342 are controlled by the control unit 250.

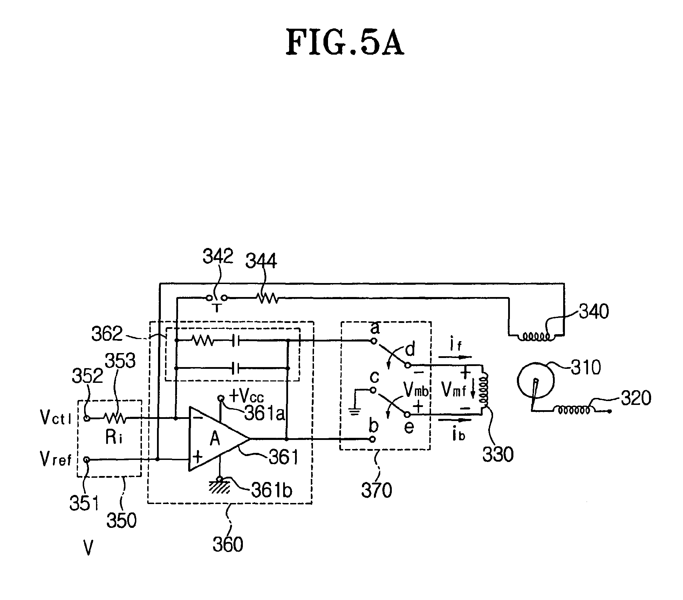

Figure 5A is a circuit diagram illustrating another example of the diaphragm driving unit of the imaging apparatus in accordance with the present invention.

The diaphragm driving unit 230c of Figure 5A has a constitution similar to that of the diaphragm driving unit 230c of Figure 4A. Therefore, differences between the diaphragm driving unit of Figure 5A and the diaphragm driving unit of Figure 4A will now be explained in brief.

Referring to Figure 5A, the second power terminal 361b of the OP-amp 361 is grounded, and a switch unit 370 is provided between the voltage conversion unit 360 and the driving coil 330.

When the diaphragm unit 214 is opened, terminals d and e of the driving coil 330 are connected to terminals a and c, respectively, of the voltage conversion unit 360, and thus a voltage is applied to the driving coil 330 in the direction for opening the diaphragm unit 214. In this case, when a control signal for switching the switch unit 370 is input from the control unit 250 to the switch unit 370 at a predetermined time t₀, the terminals d and e of the driving coil 330 are connected to the terminals c and b, respectively, of the voltage conversion unit 360. Accordingly, a voltage is applied to the driving coil 330 in the direction for closing the diaphragm unit 214.

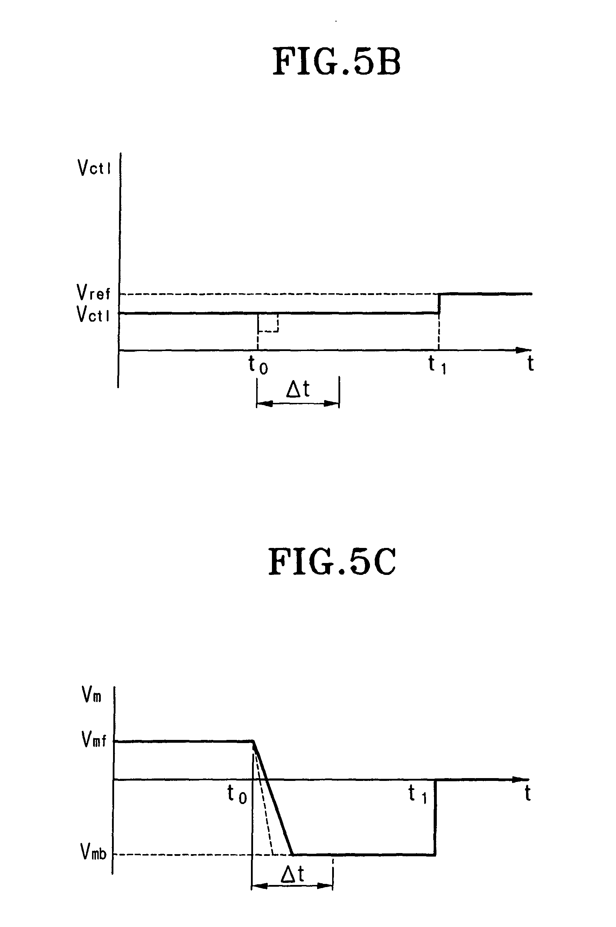

Figures 5B and 5C show variations of the diaphragm control signal and the reference potential signal inputted to the input terminal unit of the diaphragm driving unit of Figure 5A, and the voltage supplied to the driving coil with time, respectively.

In contrast to Figures 4B and 4C, in Figures 5B and 5C, although the diaphragm control signal is not varied at a predetermined time t₀, the voltage applied to the driving coil 330 can be varied. However, the diaphragm driving unit 230c of Figure 5A can also shorten the time for closing the diaphragm unit 214 by varying the diaphragm control signal at a predetermined time t₀. In Figures 5B and 5C, variations of the diaphragm control signal and variations of the voltage applied to the driving coil 330 are indicated by dotted lines.

In Figures 4A thru 4D and Figures 5B and 5C, t₀, t₁ and Δt denote a start time of the close operation of the diaphragm unit 214, a charge extract end time for one frame in the photoelectric transduction unit 218, and a complete close time of the diaphragm unit 214, respectively.

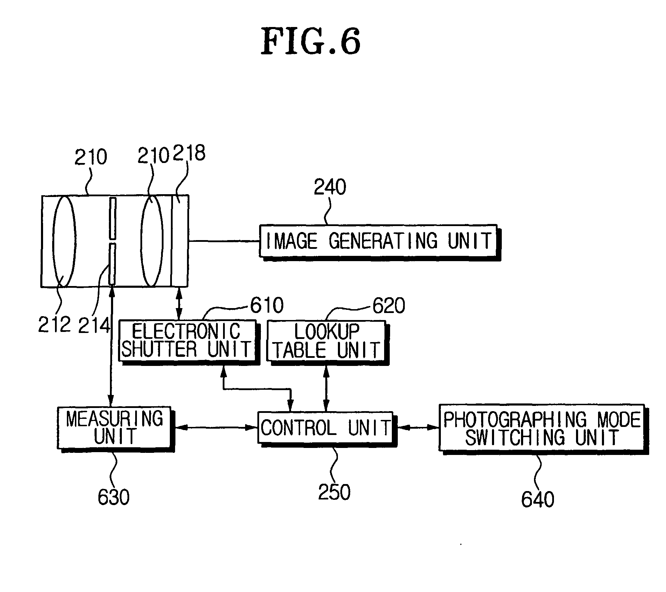

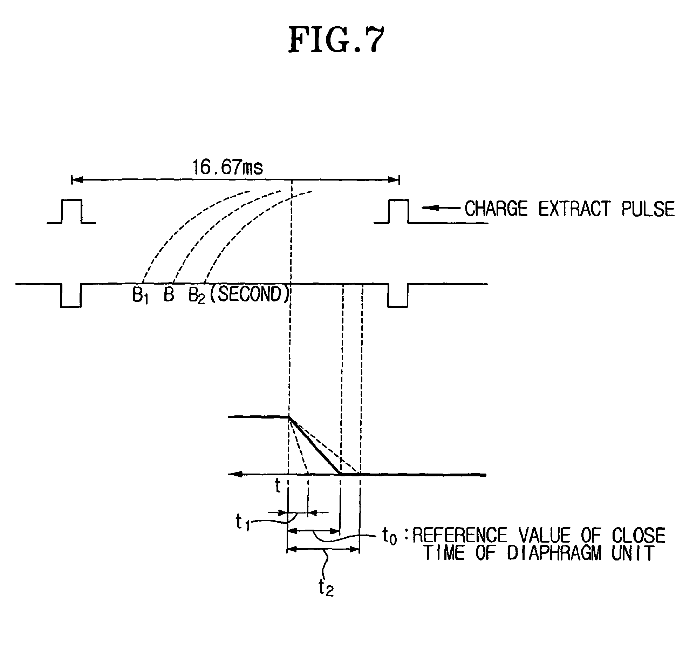

Figure 6 is a block diagram illustrating the internal structure of an imaging apparatus having a function of preventing blur of a still image in accordance with a second embodiment of the present invention, and Figure 7 shows variations of an electronic shutter speed and a close time of a diaphragm unit of the imaging apparatus of Figure 6.

As illustrated in Figure 6, the imaging apparatus 200' further includes an electronic shutter unit 610, a lookup table unit 620, and a measuring unit 630.

The electronic shutter unit 610 controls the amount of charge accumulated in the photoelectric transduction unit 218 by varying a potential barrier value of the photoelectric transduction unit 218.

The lookup table unit 620 records compensation values for the electronic shutter speed corresponding to variations in the time between open and close operations of the diaphragm unit 214 on the basis of the electronic shutter speed set up for the reference time from the open to closed states of the diaphragm unit 214 in order that the output of the photoelectric transduction unit 218 have an appropriate level.

The measuring unit 630 measures the time between open and closed states of the diaphragm unit 214. The control unit 250 extracts a compensation value from the lookup table unit 620 according to a difference between the value measured in the measuring unit 630 and the reference time value, and outputs a control signal for adjusting the electronic shutter speed of the electronic shutter unit 610.

The control unit 250 outputs, to the electronic shutter unit 610, a control signal for varying the electronic shutter speed by as much as the compensation value stored in the lookup table unit 620 according to the difference between the close time measured in the measuring unit 630 and the reference close time.

As depicted in Figure 7, t₀ denotes the reference time between open and closed states for the diaphragm unit 214. The control unit 250 of the imaging apparatus 200 sets up the electronic shutter speed in order that the output of the photoelectric transduction unit 218 has a proper level according to the reference time t₀. However, the actual time between the open and closed states of the diaphragm unit 214 may be different from the reference time t₀. That is, the diaphragm unit 214 may be more rapidly or more slowly closed than the reference time indicated by t₁ and t₂ in Figure 7.

When the diaphragm unit 214 is closed in the time interval t₁ and earlier than the reference time t₀, the amount of the charge accumulated in the photoelectric transduction unit 218 does not reach an appropriate level. This is because the amount of light incident on the photoelectric transduction unit 218 varies according to the lens or brightness of the subject.

When the reference time for closing the diaphragm unit 214 is t₀ and the electronic shutter speed set up for a currently-photographed field is B seconds, if the close time of the diaphragm unit 214 measured in the measuring unit 630 is t₁, the control unit 250 searches in the lookup table unit 620 to extract a compensation value corresponding to a difference between the reference time t₀ and the measured time t₁.

The control unit 250 outputs a control signal to the electronic shutter unit 610 so as to vary the electronic shutter speed to B₁, which is an electronic shutter speed for increasing the amount of charge accumulated in the photoelectric transduction unit 218 according to the compensation value. On the other hand, when the close time of the diaphragm unit 214 is t₂, the varied electronic shutter speed is B₂.

The imaging apparatus having the function of preventing the blur of a still image in accordance with the present invention was described above in detail with reference to the accompanying drawings. Exemplary imaging apparatuses include a variety of imaging apparatuses, such as a digital camera, a digital camcorder and a computer camera. In the case of the imaging apparatus having a motion picture imaging function as a main function, such as the digital camcorder, in imaging a motion picture, a voltage supplied to the driving coil 330 for opening the diaphragm unit 214 is not inverted in closing the diaphragm unit 214. Preferably, the voltage is inverted merely in imaging a still image.

In this case, the imaging apparatus 200 further includes an imaging mode switching unit 640 (Figure 6) for switching between a still image mode and a motion picture mode. As long as the imaging mode switching unit 640 is set up in the still image mode, when closing the diaphragm unit 214, the control unit 250 outputs, to the diaphragm driving unit 300, a control signal for inverting the voltage supplied to the driving coil 330 in opening the diaphragm unit 214.

In accordance with the present invention, when imaging a still image, power is supplied to the diaphragm motor in a direction for closing the diaphragm in order to reduce the time for closing the diaphragm, thereby preventing the blur of the still image due to movement of the subject or shaking of the photographer's hands.

Moreover, a special mechanical shutter is not required by varying the direction of the power supplied to the diaphragm motor, thereby reducing the size of the lens unit and cutting down the production cost. In addition, the image can be clearly captured by varying the electronic shutter speed according to the close time of the diaphragm.

## Claims

1. An imaging apparatus including:
a diaphragm unit (214) comprising a diaphragm (214);
a diaphragm driving unit (300); and
an elastic member (320) for closing the diaphragm;
the diaphragm unit (214) and the diaphragm driving unit (300) being arranged to function together to set both the aperture and the exposure time for capture of an image the and the diaphragm driving unit (300) being operable to drive the diaphragm during opening and closing thereof;
**characterised in that**:
the diaphragm driving unit (300) comprises a diaphragm motor having a driving coil (330) and a damping coil (340), and a switch (342) is connected to said damping coil (340) and a resistance (344), the switch (342) being arranged to be operated by a control unit (250) such that the damping coil (340) is effective during opening of the diaphragm and ineffective during closing of the diaphragm.

2. An apparatus according to claim 1, including a photoelectric transduction unit (218) arranged to be exposed by the opening of said diaphragm.

3. An apparatus according to claim 2, wherein the control means (250) is configured, for each exposure, to send a close signal to the diaphragm driving unit (310) until extraction of image charges from the image sensor (218) is complete.

4. The apparatus according to claim 1, wherein the diaphragm driving unit (300) comprises:
a diaphragm motor (220c) arranged to open and close the diaphragm by imparting a rotational movement generated by a magnetic field to the diaphragm unit (214); and
a diaphragm motor control unit (230c) for controlling a direction of rotation and a speed of the diaphragm motor (220c).

5. The apparatus according to claim 4, wherein the diaphragm motor (220c) comprises:
a rotor (310) connected to the diaphragm unit (214), and rotated in at least one of a forward direction and a backward direction under control of the diaphragm motor control unit (230c);
wherein:
the elastic member (320) has one end connected to a fixed point and another end connected to the rotor (310) for rotating the rotor (310) in a direction for closing the diaphragm;
the driving coil (330) is arranged to generate the magnetic field to cause a rotational movement of the rotor (310) in at least one of a direction for opening and a direction for closing the diaphragm; and
the damping coil (340) is arranged to prevent damping of the rotor (310).

6. The apparatus according to claim 5, wherein the diaphragm motor control unit (230c) comprises:
an input voltage terminal unit (350) having one input (351) for receiving a reference potential signal and another input (352), arranged to receive a diaphragm control signal; and
a voltage conversion unit (360), arranged to convert an input voltage received from the input voltage terminal unit (350) into a driving voltage of the diaphragm motor (220c);
wherein the control unit (250) is arranged to output a first control signal for varying the diaphragm control signal to form the driving voltage in the driving coil (330) to close the diaphragm unit and to output a second control signal for opening the switch (342) when closing the diaphragm (214).

7. The apparatus according to claim 6, comprising:
a photoelectric transduction unit (218) arranged to be exposed by the opening of said diaphragm; and
a pulse generation unit (114) arranged to output a charge extract pulse for extracting charge accumulated in the photoelectric transduction unit (218) and an erase pulse for erasing the accumulated charge;
wherein the diaphragm control signal is supplied until an operation of extracting the charge accumulated in the photoelectric transduction unit (218) is completed according to the charge extract pulse from the pulse generation unit (144).

8. The apparatus according to claim 6, wherein the diaphragm control signal causes an initial value of the driving voltage to be higher than a final value of the driving voltage for a predetermined period of time after a start time of the close operation of the diaphragm.

9. The apparatus according to claim 5, wherein the diaphragm motor control unit (230c) comprises:
an input voltage terminal unit (350) having one input (351) arranged to receive a reference potential signal and another input (352) arranged toreceive a diaphragm control signal;
a voltage conversion unit (360) arranged to convert an input voltage received from the input voltage terminal unit (350) into a driving voltage of the diaphragm motor (220c); and
a switch unit (370) arranged to vary a voltage supplied from the voltage conversion unit (360) to the diaphragm motor (220c) and to supply the driving voltage to the diaphragm motor (220c) to alternately open and close the diaphragm;
wherein the control unit (250) is arranged to output a switching control signal to the switch unit, thereby outputting a control signal for supplying, to the diaphragm unit (214), the driving voltage for closing the diaphragm by inverting the driving voltage supplied to the diaphragm motor (220c) in opening the diaphragm when closing the diaphragm, and for outputting a control signal for opening the switch (342) connected to the damping coil (340) when supplying the driving voltage to close the diaphragm.

10. The apparatus according to claim 9, wherein the driving voltage for closing the diaphragm is supplied until the operation of extracting the charge accumulated in the photoelectric transduction unit (218) is completed, according to the charge extract pulse from the pulse generation unit (144).

11. The apparatus according to claim 10, wherein the driving voltage has an initial value higher than a final value, and is a step signal which maintains the initial value for a predetermined period of time.

12. The apparatus according to claim 1, further comprising a photographing mode switching unit (640) arranged to switch the apparatus between a still image mode and a motion picture mode, wherein the control unit (250) is arranged to output a control signal for supplying the driving voltage for closing the diaphragm when the photographing mode switching unit (640) is switched to the still image mode.

13. The apparatus according to claim 1, 4, 5, 6, 7, 8, 9, 10, 11 or 12, further comprising:
an electronic shutter unit (610) arranged to control an amount of the charge accumulated in the photoelectric transduction unit (218) by varying a potential barrier value of the photoelectric transduction unit (218);
a lookup table unit (620) arranged to record compensation values of an electronic shutter speed corresponding to variations of the close time of the diaphragm on the basis of the electronic shutter speed set up for a reference close time from an open state to a close state of the diaphragm; and
a measuring unit (630) arranged to measure the close time of the diaphragm;
wherein the control unit (250) is arranged to output to the electronic shutter unit (610) a control signal for varying the electronic shutter speed by as much as the compensation value recorded in the lookup table unit (620) according to a difference between the close time measured in the measuring unit (630) and the reference close time.

## Patentansprüche

1. Bildaufnahmevorrichtung einschließend:
eine Blendeneinheit (214), die eine Blende (214) umfasst;
eine Blendenantriebseinheit (300); und
ein elastisches Element (320) zum Schließen der Blende;
wobei die Blendeneinheit (214) und die Blendenantriebseinheit (300) eingerichtet sind, zusammen zu funktionieren, um sowohl die Apertur als auch die Belichtungszeit zum Erfassen eines Bilds einzustellen und die Blendenantriebseinheit (300) betriebsfähig ist, die Blende während deren Öffnen und Schließen anzutreiben;
**dadurch gekennzeichnet, dass**:
die Blendenantriebseinheit (300) einen Blendenmotor mit einer Antriebsspule (330) und eine Dämpfungsspule (340) umfasst und ein Schalter (342) an besagte Dämpfungsspule (340) und einen Widerstand (344) angeschlossen ist, wobei der Schalter (342) eingerichtet ist, von einer Steuerungseinheit (250) so gesteuert zu werden, dass die Dämpfungsspule (340) während des Öffnens der Blende effektiv und während des Schließens der Blende ineffektiv ist.

2. Vorrichtung nach Anspruch 1, die eine fotoelektrische Wandlungseinheit (218) einschließt, die eingerichtet ist, durch Öffnen der besagten Blende belichtet zu werden.

3. Vorrichtung nach Anspruch 2, wobei das Steuerungsmittel (250) konfiguriert ist, für jede Belichtung, ein Schließsignal an die Blendenantriebseinheit (310) zu senden, bis die Extraktion von Bildladungen aus dem Bildsensor (218) abgeschlossen ist.

4. Vorrichtung nach Anspruch 1, wobei die Blendenantriebseinheit (300) umfasst:
einen Blendenmotor (220c), der eingerichtet ist, die Blende durch Mitteilen einer Rotationsbewegung zu öffnen und zu schließen, die durch ein Magnetfeld zur Blendeneinheit (214) generiert wird; und
eine Blendenmotorsteuerungseinheit (230c) zum Steuern einer Drehrichtung und einer Drehzahl des Blendenmotors (220c).

5. Vorrichtung nach Anspruch 4, wobei der Blendenmotor (220c) umfasst:
einen Rotor (310), der an die Blendeneinheit (214) angeschlossen ist und in zumindest einer Vorwärtsrichtung und einer Rückwärtsrichtung unter Kontrolle der Blendenmotorsteuerungseinheit (230c) rotiert;
wobei:
das elastische Element (320) ein Ende an einem festen Punkt und ein weiteres Ende an den Rotor (310) angeschlossen hat, um den Rotor (310) in eine Richtung zum Schließen der Blende zu rotieren;
die Antriebsspule (330) eingerichtet ist, das Magnetfeld zu generieren, um eine Drehbewegung des Rotors (310) in zumindest eine Richtung zum Öffnen und eine Richtung zum Schließen der Blende zu bewirken; und
die Dämpfungsspule (340) eingerichtet ist, Dämpfen des Rotors (310) zu verhindern.

6. Vorrichtung nach Anspruch 5, wobei die Blendenmotorsteuerungseinheit (230c) umfasst:
eine Anschlussklemmeneinheit (350) für die Eingangsspannung mit einem Eingang (351) zum Empfangen eines Referenzpotenzialsignals und einem weiteren Eingang (352), der eingerichtet ist, ein Blendensteuerungssignal zu empfangen; und
eine Spannungswandlungseinheit (360), die eingerichtet ist, eine von der Anschlussklemmeneinheit (350) für Eingangsspannung empfangene Eingangsspannung in eine Antriebsspannung des Blendenmotors (220c) umzuwandeln;
wobei die Steuerungseinheit (250) eingerichtet ist, ein erstes Steuerungssignal zum Variieren des Blendensteuerungssignals auszugeben, um die Antriebsspannung in der Antriebsspule (330) zu bilden, um die Blendeneinheit zu schließen und ein zweites Steuerungssignal zum Öffnen des Schalters (342) beim Schließen der Blende (214) auszugeben.

7. Vorrichtung nach Anspruch 6, umfassend:
Eine fotoelektrische Wandlungseinheit (218), die eingerichtet ist, durch Öffnen der besagten Blende belichtet zu werden; und
eine Impulsbildungseinheit (114), die eingerichtet ist, einen Ladungsextraktionsimpuls zum Extrahieren von Ladung, die sich in der fotoelektrischen Wandlungseinheit (218) angesammelt hat, und einen Löschimpuls zum Löschen der angesammelten Ladung auszugeben;
wobei das Blendensteuerungssignal geliefert wird, bis ein Vorgang zum Extrahieren der in der fotoelektrischen Wandlungseinheit (218) angesammelten Ladung übereinstimmend mit dem Ladungsextraktionsimpuls von der Impulsbildungseinheit (144) beendet ist.

8. Vorrichtung nach Anspruch 6, wobei das Blendensteuerungssignal bewirkt, dass ein anfänglicher Wert der Antriebsspannung höher als ein endgültiger Wert der Antriebsspannung für eine vorbestimmte Zeitspanne nach einer Startzeit des Schließvorgangs der Blende ist.

9. Vorrichtung nach Anspruch 5, wobei die Blendenmotorsteuerungseinheit (230c) umfasst:
eine Anschlussklemmeneinheit (350) für die Eingangsspannung mit einem Eingang (351) der eingerichtet ist, ein Referenzpotenzialsignal zu empfangen und einem weiteren Eingang (352), der eingerichtet ist, ein Blendensteuerungssignal zu empfangen;
eine Spannungswandlungseinheit (360), die eingerichtet ist, eine von der Anschlussklemmeneinheit (350) für Eingangsspannung empfangene Eingangsspannung in eine Antriebsspannung des Blendenmotors (220c) umzuwandeln; und
eine Schaltereinheit (370), die eingerichtet ist, eine von der Spannungswandlungseinheit (360) zum Blendenmotor (220c) gelieferte Spannung zu variieren und die Antriebsspannung zum Blendenmotor (220c) zu liefern, um die Blende abwechselnd zu öffnen und zu schließen;
wobei die Steuerungseinheit (250) eingerichtet ist, ein Schaltsteuerungssignal an die Schaltereinheit auszugeben, **dadurch** ein Steuerungssignal an die Blendeneinheit (214) zur Lieferung der Antriebsspannung auszugeben, um die Blende durch Invertieren der Antriebsspannung, die dem Blendenmotor (220c) beim Öffnen der Blende geliefert wurde, zu schließen und zum Ausgeben eines Steuerungssignals zum Öffnen des Schalters (342), der an die Dämpfungsspule (340) angeschlossen ist, wenn die Antriebsspannung zum Schließen der Blende geliefert wird.

10. Vorrichtung nach Anspruch 9, wobei die Antriebsspannung zum Schließen der Blende geliefert wird, bis der Vorgang zum Extrahieren der in der fotoelektrischen Wandlungseinheit (218) angesammelten Ladung übereinstimmend mit dem Ladungsextraktionsimpuls von der Impulsbildungseinheit (144) beendet ist.

11. Vorrichtung nach Anspruch 10, wobei die Antriebsspannung einen anfänglichen Wert hat, der höher als ein endgültiger Wert ist und ein Schrittsignal ist, das den anfänglichen Wert für eine vorbestimmte Zeitspanne aufrechterhält.

12. Vorrichtung nach Anspruch 1, die weiter eine Schalteinheit (640) für Fotografiermodus umfasst, die eingerichtet ist, die Vorrichtung zwischen einem Stehbildmodus und einem Bewegungsbildmodus zu schalten, wobei die Steuerungseinheit (250) eingerichtet ist, ein Steuerungssignal zur Lieferung der Antriebsspannung zum Schließen der Blende zu liefern, wenn die Schalteinheit (640) für Fotografiermodus auf den Stehbildmodus geschaltet wird.

13. Vorrichtung nach Anspruch 1, 4, 5, 6, 7, 8, 9, 10, 11 oder 12, weiter umfassend:
eine elektronische Verschlusseinheit (610), die eingerichtet ist, eine Größe der, in der fotoelektrischen Wandlungseinheit (218) angesammelten Ladung, durch Variieren eines Potenzialbarrierewerts der fotoelektrischen Wandlungseinheit (218) zu steuern;
eine Nachschlagtabelleneinheit (620), die eingerichtet ist, Kompensationswerte einer elektronischen Verschlussgeschwindigkeit, die Variationen der Verschlusszeit der Blende entsprechen, auf der Basis der elektronischen Verschlussgeschwindigkeit aufzuzeichnen, die für eine Referenzverschlusszeit von einem geöffneten Zustand in einen geschlossenen Zustand der Blende eingestellt wurde; und
eine Messeinheit (630), die eingerichtet ist, die Verschlusszeit der Blende zu messen;
wobei die Steuerungseinheit (250) eingerichtet ist, an die elektronische Verschlusseinheit (610) ein Steuerungssignal zum Variieren der elektronischen Verschlussgeschwindigkeit um soviel wie der in der Nachschlagtabelleneinheit (620) aufgezeichnete Kompensationswert übereinstimmend mit einer Differenz zwischen der in der Messeinheit (630) gemessenen Verschlusszeit und der Referenzverschlusszeit auszugeben.

## Revendications

1. Appareil de prise de vues comportant :
une unité de diaphragme (214) comprenant un diaphragme (214) ;
une unité de commande de diaphragme (300) ; et
un élément élastique (320) pour fermer le diaphragme ;
l'unité de diaphragme (214) et l'unité de commande de diaphragme (300) étant agencées pour fonctionner ensemble afin de régler à la fois l'ouverture et le temps d'exposition pour la prise d'une image et l'unité de commande de diaphragme (300) étant actionnable pour commander le diaphragme durant son ouverture et sa fermeture ;
**caractérisé en ce que** :
l'unité de commande de diaphragme (300) comprend un moteur de diaphragme ayant une bobine d'entraînement (330) et une bobine d'amortissement (340), et un commutateur (342) est connecté à ladite bobine d'amortissement (340) et à une résistance (344), le commutateur (342) étant agencé pour être actionné par une unité de commande (250) de telle sorte que la bobine d'amortissement (340) soit opérante durant l'ouverture du diaphragme et inopérante durant la fermeture du diaphragme.

2. Appareil selon la revendication 1, comportant une unité de transduction photoélectrique (218) agencée pour être exposée par l'ouverture dudit diaphragme.

3. Appareil selon la revendication 2, dans lequel le moyen de commande (250) est configuré, pour chaque exposition, pour envoyer un signal de fermeture à l'unité de commande de diaphragme (310) jusqu'à ce que l'extraction de charges d'images depuis le capteur d'images (218) soit terminée.

4. Appareil selon la revendication 1, dans lequel l'unité de commande de diaphragme (300) comprend :
un moteur de diaphragme (220c) agencé pour ouvrir et fermer le diaphragme en conférant un mouvement de rotation généré par un champ magnétique à l'unité de diaphragme (214) ; et
une unité de commande de moteur de diaphragme (230c) pour commander un sens de rotation et une vitesse du moteur de diaphragme (220c).

5. Appareil selon la revendication 4, dans lequel le moteur de diaphragme (220c) comprend :
un rotor (310) connecté à l'unité de diaphragme (214), et tourné dans au moins l'un d'un sens avant et d'un sens arrière sous la commande de l'unité de commande de moteur de diaphragme (230c) ;
dans lequel :
l'élément élastique (320) a une extrémité connectée à un point fixe et une autre extrémité connectée au rotor (310) pour faire tourner le rotor (310) dans un sens de fermeture du diaphragme ;
la bobine d'entraînement (330) est agencée pour générer le champ magnétique afin d'engendrer un mouvement de rotation du rotor (310) dans au moins l'un d'un sens d'ouverture et d'un sens de fermeture du diaphragme ; et
la bobine d'amortissement (340) est agencée pour empêcher l'amortissement du rotor (310).

6. Appareil selon la revendication 5, dans lequel l'unité de commande de moteur de diaphragme (230c) comprend :
une unité terminale de tension d'entrée (350) ayant une entrée (351) pour recevoir un signal de potentiel de référence et une autre entrée (352) agencée pour recevoir un signal de commande de diaphragme ; et
une unité de conversion de tension (360), agencée pour convertir une tension d'entrée reçue depuis l'unité terminale de tension d'entrée (350) en une tension de commande du moteur de diaphragme (220c) ;
dans lequel l'unité de commande (250) est agencée pour produire en sortie un premier signal de commande pour faire varier le signal de commande de diaphragme afin de former la tension de commande dans la bobine d'entraînement (330) en vue de fermer l'unité de diaphragme et produire en sortie un second signal de commande pour ouvrir le commutateur (342) lors de la fermeture du diaphragme (214).

7. Appareil selon la revendication 6, comprenant :
une unité de transduction photoélectrique (218) agencée pour être exposée par l'ouverture dudit diaphragme ; et
une unité de génération d'impulsion (114) agencée pour produire en sortie une impulsion d'extraction de charge pour extraire une charge accumulée dans l'unité de transduction photoélectrique (218) et une impulsion d'effacement pour effacer la charge accumulée ;
dans lequel le signal de commande de diaphragme est alimenté jusqu'à ce qu'une opération d'extraction de la charge accumulée dans l'unité de transduction photoélectrique (218) soit terminée en fonction de l'impulsion d'extraction de charge provenant de l'unité de génération d'impulsion (144).

8. Appareil selon la revendication 6, dans lequel le signal de commande de diaphragme fait en sorte qu'une valeur initiale de la tension de commande soit supérieure à une valeur finale de la tension de commande pendant une période de temps prédéterminée après un temps de départ de l'opération de fermeture du diaphragme.

9. Appareil selon la revendication 5, dans lequel l'unité de commande de moteur de diaphragme (230c) comprend :
une unité terminale de tension d'entrée (350) ayant une entrée (351) agencée pour recevoir un signal de potentiel de référence et une autre entrée (352) agencée pour recevoir un signal de commande de diaphragme ;
une unité de conversion de tension (360) agencée pour convertir une tension d'entrée reçue depuis l'unité terminale de tension d'entrée (350) en une tension de commande du moteur de diaphragme (220c) ; et
une unité de commutation (370) agencée pour faire varier une tension fournie par l'unité de conversion de tension (360) au moteur de diaphragme (220c) et fournir la tension de commande au moteur de diaphragme (220c) afin d'alternativement ouvrir et fermer le diaphragme ;
dans lequel l'unité de commande (250) est agencée pour produire en sortie un signal de commande de commutation vers l'unité de commutation, produisant ainsi en sortie un signal de commande pour fournir, à l'unité de diaphragme (214), la tension de commande pour fermer le diaphragme en inversant la tension de commande fournie au moteur de diaphragme (220c) à l'ouverture du diaphragme lors de la fermeture du diaphragme, et pour produire en sortie un signal de commande pour ouvrir le commutateur (342) connecté à la bobine d'amortissement (340) durant la fourniture de la tension de commande afin de fermer le diaphragme.

10. Appareil selon la revendication 9, dans lequel la tension de commande pour fermer le diaphragme est fournie jusqu'à ce que l'opération d'extraction de la charge accumulée dans l'unité de transduction photoélectrique (218) soit terminée, en fonction de l'impulsion d'extraction de charge provenant de l'unité de génération d'impulsion (144).

11. Appareil selon la revendication 10, dans lequel la tension de commande a une valeur initiale supérieure à une valeur finale, et est un signal de pas qui maintient la valeur initiale pendant une période de temps prédéterminée.

12. Appareil selon la revendication 1, comprenant en outre une unité de commutation de mode de photographie (640) agencée pour commuter l'appareil entre un mode d'image fixe et un mode d'image animée, l'unité de commande (250) étant agencée pour produire en sortie un signal de commande pour fournir la tension de commande servant à fermer le diaphragme quand l'unité de commutation de mode de photographie (640) est commutée sur le mode d'image fixe.

13. Appareil selon la revendication 1, 4, 5, 6, 7, 8, 9, 10, 11 ou 12, comprenant en outre :
une unité d'obturateur électronique (610) agencée pour commander une quantité de la charge accumulée dans l'unité de transduction photoélectrique (218) en faisant varier une valeur de barrière de potentiel de l'unité de transduction photoélectrique (218) ;
une unité de table de consultation (620) agencée pour enregistrer des valeurs de compensation d'une vitesse d'obturateur électronique correspondant à des variations du temps de fermeture du diaphragme en fonction de la vitesse d'obturateur électronique réglée pour un temps de fermeture de référence d'un état ouvert à un état fermé du diaphragme ; et
une unité de mesure (630) agencée pour mesurer le temps de fermeture du diaphragme ;
dans lequel l'unité de commande (250) est agencée pour produire en sortie vers l'unité d'obturateur électronique (610) un signal de commande afin de faire varier la vitesse d'obturateur électronique par autant que la valeur de compensation enregistrée dans l'unité de table de consultation (620) en fonction d'une différence entre le temps de fermeture mesuré dans l'unité de mesure (630) et le temps de fermeture de référence.
